# DEMANDE DE BREVET EUROPEEN

(11) **EP 1 312 779 A1**
(43) Date de publication de la demande: **21.05.2003**
(21) Numéro de dépôt: 02292865.9
(22) Date de dépôt: 19.11.2002
(51) Int. Cl.: F02C 7/228, F04C 2/18

(54) **Système d'injection de carburant dans une turbomachine**

(30) Priorité: 19.11.2001 FR 0114908
(71) Demandeur: Hispano Suiza, 92700 Colombes (FR)
(72) Inventeur: Leblanc, Pascal, 77130 La Grande Paroisse (FR); Marly, Pascal, 77000 Melun (FR); Rodrigues, José, 77176 Nandy (FR); Tiepel, Alain, 77930 Chailly en Biere (FR)
(74) Mandataire: Joly, Jean-Jacques

(57) **Abrégé**

Système d'injection de carburant dans une turbomachine comprenant N injecteurs de carburant (10₁,...,10_{N}) disposés dans une chambre de combustion de la turbomachine et alimentés depuis un réservoir de carburant (12), le système d'injection comportant en outre, interposé entre les N injecteurs et le réservoir, un moyen unique de pompage (14) pour prélever du carburant dans le réservoir et délivrer N débits dosés de carburant vers les injecteurs.

## Description

### Arrière-plan de l'invention

La présente invention se rapporte au domaine général des systèmes d'injection de carburant dans une chambre de combustion d'une turbomachine. Elle vise plus particulièrement un moyen de pompage de carburant équipant de tels systèmes d'injection.

Comme l'illustre schématiquement la figure 5, un système d'injection de carburant dans une turbomachine comporte typiquement une pompe 102, par exemple à engrenages, entraînée par un moteur (non représenté), permettant de prélever du carburant issu d'un réservoir de carburant 104, une pluralité d'injecteurs 106 disposés dans une chambre de combustion de la turbomachine et munis chacun d'un clapet doseur de carburant 108, et un dispositif de dosage de carburant 110 interposé entre ces deux ensembles d'éléments pour contrôler le débit de carburant devant s'écouler depuis la pompe vers les injecteurs. Le carburant excédentaire en sortie du dispositif de dosage 110 est réinjecté à l'entrée de la pompe 102.

Avec une telle configuration, le débit de carburant injecté dans la chambre de combustion de la turbomachine dépend notamment du réglage de chaque injecteur 106, de la cokéfaction qui se forme au niveau du nez de ces injecteurs, et de la différence de hauteur dans la chambre de combustion entre les injecteurs. En outre, le frottement entre le clapet doseur 108 de chaque injecteur 106 et une douille dans laquelle il coulisse provoque des phénomènes d'hystérésis engendrant des retards à l'ouverture et à la fermeture de ces clapets doseurs. Il en résulte une hétérogénéité d'injection en carburant dans la chambre de combustion qui peut notamment entraîner des difficultés d'allumage du moteur de la turbomachine.

### Objet et résumé de l'invention

La présente invention vise donc à pallier de tels inconvénients en proposant un nouveau système d'injection de carburant dans une turbomachine qui permet de simplifier le circuit hydraulique en supprimant les clapets doseurs des injecteurs et le dispositif de dosage de carburant, et de diminuer l'hétérogénéité de débit de carburant injecté entre chaque injecteur.

A cet effet, il est prévu un système d'injection de carburant dans une turbomachine comprenant N injecteurs de carburant disposés dans une chambre de combustion de la turbomachine et alimentés depuis un réservoir de carburant, caractérisé en ce qu'il comporte en outre, interposé entre les N injecteurs et le réservoir, un moyen unique de pompage pour prélever du carburant dans le réservoir et délivrer N débits dosés de carburant vers les injecteurs.

Le moyen unique de pompage permet à la fois de prélever du carburant dans le réservoir de carburant et de diviser le débit de carburant ainsi prélevé en autant de débits dosés de carburants qu'il y a d'injecteurs. De la sorte, la pompe, les clapets doseurs d'injecteur et le dispositif dosant de carburant sont supprimés et remplacés par ce moyen unique de pompage ce qui permet d'éliminer les problèmes générés par ces éléments (phénomène d'hystérésis...). L'injection de carburant dans la chambre de combustion de la turbomachine est donc améliorée.

Les débits dosés de carburant sont de préférence identiques pour les N injecteurs. Des moyens de réglage de ces débits dosés peuvent en outre être prévus.

Le moyen unique de pompage comporte un ensemble formé d'un arbre menant d'axe longitudinal muni de N pignons menant de même diamètre, d'un arbre mené d'axe longitudinal parallèle à l'axe longitudinal de l'arbre menant, muni de N pignons menés de même diamètre engrenant sur les N pignons menant, et de N-1 entretoises d'étanchéité disposées transversalement entre deux pignons adjacents de chacun des arbres menant et mené afin de définir N zones d'admission de carburant et N zones de refoulement de carburant situées de part et d'autre d'un plan longitudinal contenant les axes longitudinaux des arbres menant et mené, les N zones d'admission de carburant communiquant entre elles par des trous percés dans les entretoises d'étanchéité. L'ensemble ainsi formé est ajusté longitudinalement de façon étanche dans un corps cylindrique comprenant au moins un orifice d'admission de carburant relié au réservoir et débouchant dans une zone quelconque d'admission de carburant, et N orifices de refoulement de carburant débouchant chacun dans l'une des N zones de refoulement de carburant pour alimenter chacun des N injecteurs.

Avantageusement, les pignons menés et menant sont de même diamètre. L'arbre menant est entraîné en rotation par un moyen moteur et les moyens de réglage des débits dosés comportent un variateur de vitesse agissant sur la vitesse de rotation de cet arbre.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente de façon schématique le circuit hydraulique d'un système d'injection de carburant selon l'invention ;
- la figure 2 est une vue en perspective et en écorché du moyen unique de pompage dosant du système d'injection de carburant selon l'invention ;
- la figure 3 est une vue en coupe selon le plan III-III de la figure 2 ;
- la figure 4 est une vue en coupe selon le plan IV-IV de la figure 2 ; et
- la figure 5 représente de façon schématique le circuit hydraulique d'un système d'injection de carburant dans une turbomachine connu de l'art antérieur.

### Description détaillée d'un mode de réalisation

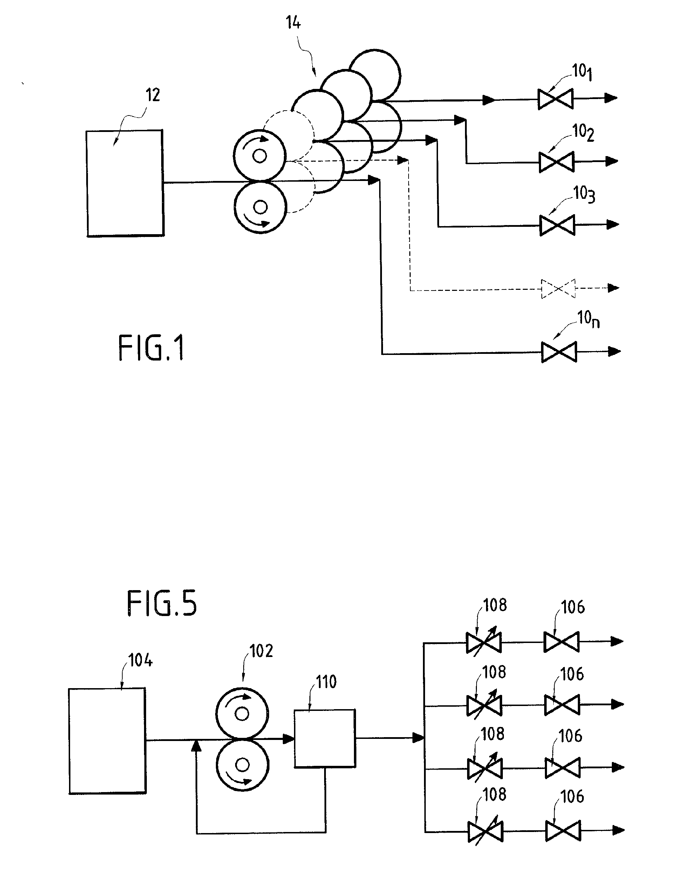

On se réfère d'abord à la figure 1 qui représente de façon schématique le circuit hydraulique du système d'injection de carburant selon l'invention.

Sur cette figure, on voit que le système d'injection de carburant dans une turbomachine comporte N injecteurs 10₁ à 10_{N} (seuls 4 sont montrés sur la figure 1) disposées dans une chambre de combustion (non représentée) de la turbomachine. Ces injecteurs 10₁ à 10_{N} sont alimentés en carburant depuis un réservoir de carburant 12. Un moyen unique de pompage 14 est interposé entre les N injecteurs 10₁ à 10_{N} et le réservoir de carburant 12 afin de prélever du carburant dans le réservoir et de délivrer N débits dosés de carburant, de préférence identiques, vers les injecteurs. Ce moyen unique de pompage 14 effectue, dans une même action, à la fois le pompage du carburant issu du réservoir et le refoulement du carburant ainsi pompé vers les N injecteurs. Le refoulement du carburant est par ailleurs réalisé de manière à doser les N débits délivrés vers les injecteurs 10₁ à 10_{N}.

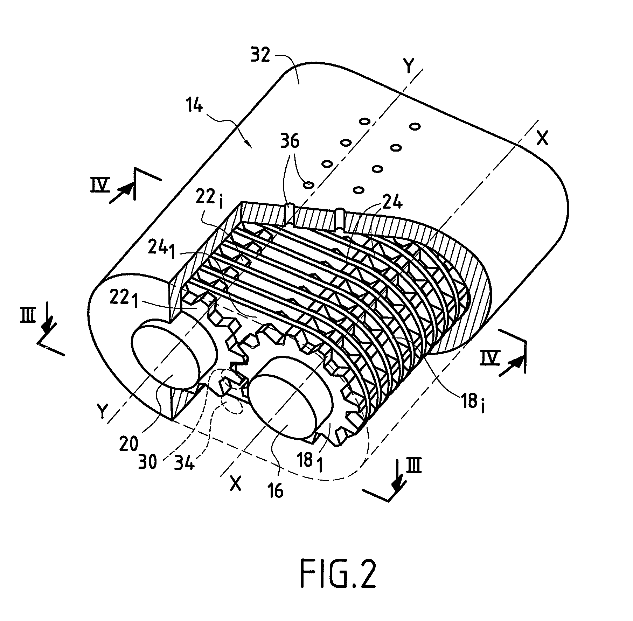

Les figures 2 à 4 représentent plus précisément le moyen unique de pompage 14 selon un mode de réalisation de l'invention. Le moyen unique de pompage 14 est notamment formé d'un ensemble comportant un arbre menant 16 d'axe longitudinal X-X muni de N pignons menant 18₁ à 18_{N} de même diamètre, et un arbre mené 20 d'axe longitudinal Y-Y parallèle à celui de l'arbre menant 16. L'arbre mené 20 est également muni de N pignons menés 22₁ à 22_{N} de même diamètre agencés de façon à engrener sur les N pignons menant 18₁ à 18_{N}. Les N pignons menés 22₁ à 22_{N} sont de préférence de diamètre identique à celui des N pignons menant 18₁ à 18_{N}. Grâce à cet engrenage entre les pignons menant et les pignons menés, la rotation de l'arbre menant 16 entraîne celle de l'arbre mené 20 en sens inverse.

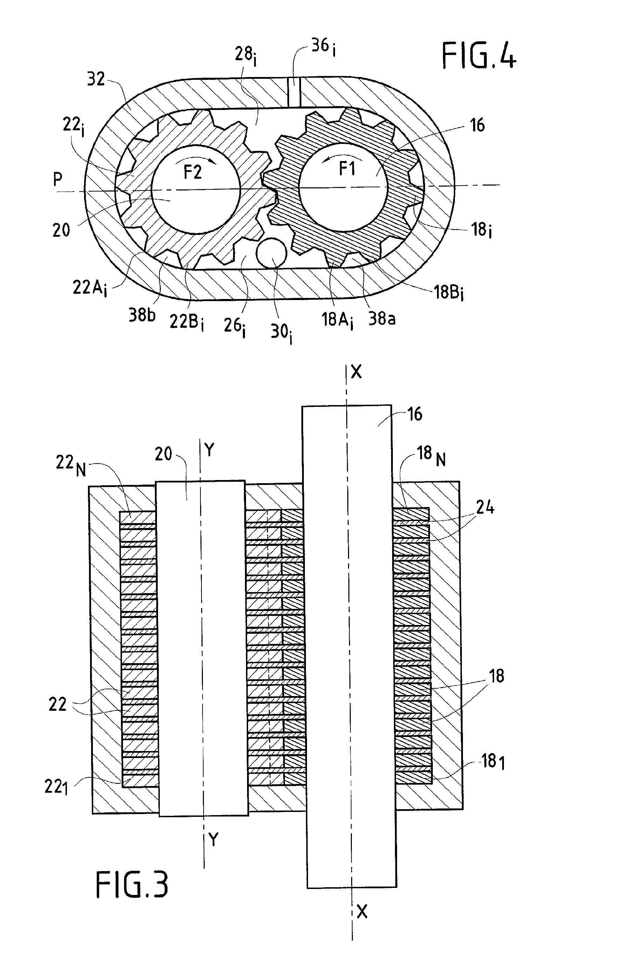

N-1 entretoises d'étanchéité 24₁ à 24_{N-1} sont en outre disposées transversalement entre deux pignons adjacents de chacun des arbres menant et mené. Plus précisément, les entretoises d'étanchéité 24₁ à 24_{N-1} sont interposées perpendiculairement aux axes longitudinaux des arbres menant et mené entre deux engrenages successifs formés par un couple de pignons menant/mené. Les entretoises d'étanchéité 24₁ à 24_{N-1} permettent de définir N zones d'admission de carburant 26₁ à 26_{N} et N zones de refoulement de carburant 28₁ à 28_{N} situées de part et d'autre d'un plan longitudinal P contenant les axes longitudinaux X-X et Y-Y des arbres menant et mené. A chaque engrenage d'un couple de pignons menant 18ᵢ / mené 22ᵢ (avec i compris entre 1 et N) correspond donc une zone d'admission de carburant 26ᵢ et une zone de refoulement de carburant 28ᵢ situées de part et d'autre du plan longitudinal P. Comme l'illustre la figure 4, N-1 trous 30₁ à 30_{N-1} percés dans les entretoises d'étanchéité 24₁ à 24_{N-1} permettent aux N zones d'admission de carburant 26₁ à 26_{N} de communiquer entre elles.

L'ensemble formé des arbres menant 16 et mené 20 et des N entretoises d'étanchéité 24₁ à 24_{N-1} est ajusté longitudinalement de façon étanche dans un corps cylindrique 32. Par ajusté longitudinalement, on entend que le corps cylindrique 32 présente une section droite dont les dimensions sont ajustées en fonction de l'entraxe et du diamètre des pignons menant/mené formant l'engrenage.

Au moins un orifice d'admission de carburant est pratiqué dans le corps cylindrique 32 du moyen unique de pompage. Il est relié au réservoir de carburant 12 et débouche dans une zone quelconque d'admission de carburant 26₁ à 26_{N}. Par exemple, comme illustré sur la figure 2, un orifice unique d'admission de carburant 34 est percé à une extrémité du corps cylindrique et débouche dans une première zone d'admission 26₁ de carburant.

Le corps cylindrique 32 du moyen unique de pompage comporte en outre N orifices de refoulement de carburant 36₁ à 36_{N} débouchant chacun dans l'une des N zones de refoulement de carburant 28₁ à 28_{N}. Selon une caractéristique avantageuse de l'invention, les N orifices de refoulement 36₁ à 36_{N} sont par exemple sensiblement alignés en quinconce sur deux rangées longitudinales parallèles aux axes longitudinaux X-X et Y-Y des arbres menant et mené.

On décrira maintenant le fonctionnement du moyen unique de pompage 14 en se référant plus particulièrement à la figure 4.

L'arbre menant 16 est entraîné en rotation dans le sens indiqué par la flèche F1 par un moyen moteur (non représenté sur les figures), par exemple électrique. Les N pignons menant 18₁ à 18_{N} engrènent alors sur les N pignons menés 22₁ à 22_{N} provoquant la rotation en sens inverse (indiqué par la flèche F2) de l'arbre mené 20. Cette rotation des arbres menant et mené a pour effet d'aspirer du carburant provenant du réservoir de carburant 12 par l'intermédiaire de l'orifice d'admission de carburant 34 relié à celui-ci, et de l'amener dans la zone d'admission de carburant 26ᵢ dans laquelle débouche cet orifice d'admission de carburant. Le carburant pénètre alors dans toutes les N zones d'admission de carburant 26₁ à 26_{N} en traversant les N-1 trous 30₁ à 30_{N-1} percés dans les N-1 entretoises d'étanchéité 24₁ à 24_{N-1}. Le carburant présent dans chacune des N zones d'admission de carburant 26ᵢ est ensuite déplacé dans la zone de refoulement de carburant correspondante 28ᵢ à l'aide du couple de pignons menant 18ᵢ/mené 22ᵢ correspondant. Plus précisément, une quantité dosée Q de carburant présent dans l'une des zones d'admission vient se loger dans une zone intermédiaire 38a, 38b comprise respectivement entre deux dents adjacentes 18Aᵢ, 18Bᵢ de l'un des pignons menant 18ᵢ et entre deux dents adjacentes 22Aᵢ, 22Bᵢ du pignon mené 22ᵢ engrenant sur ce pignon menant. Cette quantité dosée de carburant Q est alors déplacée vers la zone de refoulement correspondante sous l'effet de rotation du couple de pignons menant/mené et évacuée par l'orifice de refoulement correspondant 36ᵢ vers l'un des N injecteurs 10₁ à 10_{N}. Ainsi, le moyen unique de pompage 14 permet de délivrer N débits dosés de carburant vers les injecteurs.

Lorsque les N pignons menés 22₁ à 22_{N} sont de diamètre identique à ceux des N pignons menant 18₁ à 18_{N}, leur nombre respectif de dents est également identique. Il en résulte que la quantité de carburant évacué par l'orifice de refoulement correspondant 36ᵢ correspond, pour un tour d'engrenage, à environ deux fois la quantité dosée Q de carburant présent dans l'une des zones intermédiaires 38a, 38b multiplié par le nombre de dents. Cette quantité dosée de carburant Q dépend notamment de la distance séparant deux dents adjacentes et de la hauteur entre le pied et la tête des dents.

Selon une caractéristique avantageuse de l'invention, le système d'injection de carburant comprend en outre des moyens de réglage des débits dosés vers les N injecteurs. Ces moyens de réglage se présentent sous la forme d'un variateur de vitesse (non représenté sur les figures) agissant sur la vitesse de rotation de l'arbre menant. Le débit dosé de carburant vers chaque injecteur 10₁ à 10_{N} est donc proportionnel à la quantité dosée de carburant Q et à la vitesse de rotation de l'arbre menant 16.

Le moyen unique de pompage 14 a été décrit dans un mode de réalisation comprenant un système d'engrenage entre pignons menant et menés. Bien entendu, on pourra réaliser ce moyen unique de pompage en utilisant d'autres types d'organes engrenant. Par exemple, on pourra utiliser des galets engrenant portés par les arbres menant et mené, le principe de fonctionnement restant identique.

## Revendications

1. Système d'injection de carburant dans une turbomachine comprenant N injecteurs de carburant (10₁,...,10_{N}) disposés dans une chambre de combustion de la turbomachine et alimentés depuis un réservoir de carburant (12), **caractérisé en ce qu'**il comporte en outre, interposé entre lesdits N injecteurs et ledit réservoir, un moyen unique de pompage (14) pour prélever du carburant dans le réservoir et délivrer N débits dosés de carburant vers les injecteurs.

2. Système d'injection de carburant selon la revendication 1, **caractérisé en ce que** les N débits dosés de carburant sont identiques.

3. Système d'injection de carburant selon l'une des revendications 1 ou 2, **caractérisé en ce qu'**il comporte en outre des moyens de réglage des débits dosés de carburant.

4. Système d'injection de carburant selon la revendication 3, **caractérisé en ce que** ledit moyen unique de pompage comprend un ensemble formé :
- d'un arbre menant (16) d'axe longitudinal (X-X) muni de N pignons menant (18₁,...,18_{N}) de même diamètre,
- d'un arbre mené (20) d'axe longitudinal (Y-Y) parallèle à l'axe longitudinal de l'arbre menant (X-X), muni de N pignons menés (22₁,...,22_{N}) de même diamètre engrenant sur lesdits N pignons menant, et
- de N-1 entretoises d'étanchéité (24₁,...,24_{N-1}) disposées transversalement entre deux pignons adjacents de chacun des arbres menant et mené afin de définir N zones d'admission de carburant (26₁,...,26_{N}) et N zones de refoulement de carburant (28₁,...,28_{N}) situées de part et d'autre d'un plan longitudinal (P) contenant les axes longitudinaux des arbres menant et mené, lesdites N zones d'admission de carburant communiquant entre elles par des trous (30₁,...,30_{N-1}) percés dans les entretoises d'étanchéité ;
- ledit ensemble étant ajusté longitudinalement de façon étanche dans un corps cylindrique (32) comprenant au moins un orifice d'admission de carburant (34) relié au réservoir (12) et débouchant dans une zone quelconque d'admission de carburant (26₁,...,26_{N}), et N orifices de refoulement de carburant (36₁,...,36_{N}) débouchant chacun dans l'une des N zones de refoulement de carburant (28₁,...,28_{N}) pour alimenter chacun des N injecteurs (10₁,...,10_{N}).

5. Système d'injection de carburant selon la revendication 4, **caractérisé en ce que** les N pignons menés (22₁,...,22_{N}) sont de diamètre identique à ceux des N pignons menant (18₁,...,18_{N}).

6. Système d'injection de carburant selon l'une des revendications 4 ou 5, **caractérisé en ce que** les orifices de refoulement (36₁,...,36_{N}) sont alignés sensiblement en quinconce sur deux rangées longitudinales parallèles aux axes longitudinaux (X-X, Y-Y) des arbres menant et mené.

7. Système d'injection de carburant selon l'une quelconque des revendications 4 à 6, **caractérisé en ce que** le corps cylindrique (32) du moyen unique de pompage (14) comporte un unique orifice d'admission de carburant (34) percé à une extrémité.

8. Système d'injection de carburant selon l'une quelconque des revendications 4 à 7, **caractérisé en ce que** l'arbre menant (16) est entraîné en rotation par un moyen moteur.

9. Système d'injection de carburant selon la revendication 8, **caractérisé en ce que** les moyens de réglage des débits dosés de carburant comportent un variateur de vitesse agissant sur la vitesse de rotation de l'arbre menant.
